# EUROPÄISCHE PATENTSCHRIFT

(11) **EP 1 960 854 B1**
(45) Veröffentlichungstag und Bekanntmachung des Hinweises auf die Patenterteilung: **26.01.2011**
(21) Anmeldenummer: 06818861.4
(22) Anmeldetag: 15.11.2006
(51) Int. Cl.: G05B 23/02

(54) **DIAGNOSEVERFAHREN UND DIAGNOSEVORRICHTUNG ZUR FUNKTIONSORIENTIERTEN DIAGNOSE EINES SYSTEMS MIT VERNETZTEN KOMPONENTEN**
DIAGNOSTIC METHOD AND DIAGNOSTIC DEVICE FOR THE FUNCTION-ORIENTED DIAGNOSIS OF A SYSTEM COMPRISING INTERCONNECTED COMPONENTS
PROCEDE ET DISPOSITIF DE DIAGNOSTIC ORIENTE FONCTION D'UN SYSTEME COMPORTANT DES COMPOSANTS MIS EN RESEAU

(30) Priorität: 06.12.2005 DE 102005058380; 28.02.2006 DE 102006009585
(43) Veröffentlichungstag der Anmeldung: 27.08.2008
(73) Patentinhaber: Volkswagen AG, 38436 Wolfsburg (DE); AUDI AG, 85045 Ingolstadt (DE)
(72) Erfinder: BROSE, Heino, 39646 Oebisfelde (DE); UNGER, Andreas, 01069 Dresden (DE); REUPKE, Hinrich, 38268 Lengede (DE); KNAUER, Uwe, 85051 Ingolstadt (DE); HACK, Christian, 90429 Nürnberg (DE)
(74) Vertreter: Obst, Bernhard
(86) Internationale Anmeldenummer: PCT/EP2006/011375
(87) Internationale Veröffentlichungsnummer: WO 2007/065585

(56) Entgegenhaltungen:
- WO-A-01/31448
- WO-A-2004/059407
- DE-A1- 10 059 464
- FR-A1- 2 775 806
- US-A- 5 265 035
- US-A1- 2005 038 632
- "Integrating Functional Design and Safety Analysis" INTERNET CITATION, [Online] 21. Januar 2002 (2002-01-21), XP002264810 Gefunden im Internet: URL:http://www.setta.org/technology> [gefunden am 2003-12-12]

## Beschreibung

Die Erfindung betrifft ein Diagnoseverfahren und eine Diagnosevorrichtung für ein System, insbesondere ein Kraftfahrzeugsystem, mit Komponenten, die vernetzt sind und Funktionen für das System bereitstellen. Insbesondere betrifft die Erfindung ein Diagnoseverfahren und eine Diagnosevorrichtung für ein modernes Kraftfahrzeug.

Eine immer größere Anzahl vernetzter elektronischer Komponenten in einem System, beispielsweise einem Kraftfahrzeug, sowie eine komplexere und stärkere Verteilung von Funktionen auf die vernetzten Komponenten führen in der Zukunft zu neuen Herausforderungen hinsichtlich der Zuverlässigkeit, Sicherheit und speziell der Diagnosegenauigkeit.

Der Wunsch nach mehr Komfort, nach zahlreichen sicherheitsrelevanten Funktionen und gesetzliche Vorschriften haben zu einer immer größeren Anzahl elektronischer Komponenten in einem Kraftfahrzeug geführt. Die von den elektronischen Komponenten zur Verfügung gestellten Funktionen sind häufig komplex. Eine Funktion eines als Kraftfahrzeug ausgebildeten Systems, die beispielsweise ein Blinken für eine Fahrtrichtungsanzeige ausführt, wird heutzutage nicht von einer einzigen als Steuergerät ausgebildeten Komponente gesteuert. Vielmehr sind mehrere Steuergeräte an der Bereitstellung der Funktion Blinken beteiligt.

Die einzelnen Funktionen können Unterfunktionen aufweisen und/oder zu Funktionsbereichen zusammengefasst sein. Die hierarchische Gliederung der von dem Kraftfahrzeug bereitgestellten Funktionen kann eine Vielzahl von Hierarchieebenen aufweisen. Die erwähnte Funktion Blinken kann beispielsweise einem Funktionsbereich Beleuchtungsfunktionen zugeordnet sein. Selbst kann die Funktion Blinken Unterfunktionen wie Richtungsblinken, Notbremsblinken, Warnblinken usw. umfassen. Die Unterfunktionen können ihrerseits wieder Unterfunktionen aufweisen oder sich in mehrere Funktionen gliedern. Beispielsweise umfasst das Richtungsblinken die Unterfunktionen Richtungsblinken links und Richtungsblinken rechts.

Bei der Diagnose von Fehlern, die in dem als Kraftfahrzeug ausgestalteten System auftreten, werden heutzutage die einzelnen Komponenten des Systems analysiert. Hierbei ist häufig nicht sofort ersichtlich, welche Komponenten (beispielsweise Steuergeräte) zur Ausführung einzelner Funktionen verwendet werden. Gegenwärtig ist Expertenwissen notwendig, um die einzelnen Komponenten herauszufinden, die zur Ausführung einer Funktion verwendet werden. Bei Kraftfahrzeugen, die häufig in unterschiedlichen Modellen und Ausführungsformen hergestellt werden, ist es für Reparaturwerkstätten, selbst wenn sie nur für einen Hersteller von Kraftfahrzeugen Reparaturdienstleistungen ausführen, meist nicht möglich, dieses Expertenwissen bereitzuhalten. Dies hat seine Ursache zum Teil darin, dass dieselbe Funktion bei unterschiedlichen Modellen eines Kraftfahrzeugherstellers oder sogar bei unterschiedlichen Varianten eines Fahrzeugmodells von verschiedenen Steuergeräten, d.h. Komponenten, des Systems Kraftfahrzeug bereitgestellt wird.

Selbst wenn das Expertenwissen für Teilbereiche des Kraftfahrzeugs, beispielsweise in Form von ausgedruckten Listen, vorhanden ist, können häufig einzelne Diagnoseinstanzen nicht unabhängig voneinander diagnostiziert werden, da sie nur in einer Sequenz mit anderen Diagnoseinstanzen derselben Komponente diagnostizierbar sind.

Unter einer Diagnoseinstanz wird jede Einheit verstanden, die zu Diagnosezwecken ausgelesen werden kann, beispielsweise Parameter, Codierungen, Kalibrierungen, Messwerte usw., sowie bewirkbare Aktionen, die im Folgenden als Betätigen eines Stellglieds exemplarisch zusammengefasst sind. Als Betätigen eines Stellglieds wird somit beispielsweise das Einschalten des Leuchtmittels in einem Scheinwerfer angesehen. Ebenso wird das Betreiben eines Stellmotors, der beispielsweise zum Heben und Senken einer seitlichen Fensterscheibe in einer Fahrzeugtür verwendet wird, als ein Betätigen eines Stellglieds angesehen.

Wenn ein Nutzer eines Systems, beispielsweise eines Kraftfahrzeugs, eine Fehlfunktion des Systems feststellt, so wird die Fehlerbeschreibung in der Regel funktionsorientiert sein. Ein Kraftfahrzeugbesitzer wird beispielsweise den Ausfall des Richtungsblinkens links als Fehlerbeschreibung liefern anstelle einer Aussage, dass ein Steuergerät, welches das Leuchtmittel vorne links ansteuert, welches wiederum für das Richtungsblinken links verantwortlich ist, defekt ist. Häufig wird der Nutzer gar keine Kenntnis davon haben, dass zum Ansteuern des Leuchtmittels ein eigenes Steuergerät vorhanden ist. Insbesondere bei sehr komplexen Funktionen, an denen viele Komponenten des Kraftfahrzeugs zur Bereitstellung beteiligt sind, ist daher heutzutage eine Fehlerdiagnose sehr aufwendig. Meist werden die einzelnen Komponenten des Fahrzeugs schrittweise diagnostiziert. Hierbei werden zum Teil Abweichungen von einem Sollzustand festgestellt, die nicht ursächlich für den Fehler sind und auch andere Funktionen des Kraftfahrzeugs nicht beeinträchtigen. Dennoch werden solche Abweichungen in der Regel zum Anlass genommen, diese ebenfalls zu beseitigen. Hierdurch werden häufig Komponenten ausgetauscht, die zwar Abweichungen von einem Sollzustand aufweisen, die jedoch nicht ursächlich für irgendein Schlechtverhalten des Systems sind, sondern lediglich Abweichungen von einem Gutverhalten sind, welches für die jeweilige Komponente dokumentiert ist.

Aus den beschriebenen Problemen bei der Diagnose von Systemen mit vernetzten Komponenten, die Funktionen für das System bereitstellen, ist ersichtlich, dass ein verbessertes Diagnoseverfahren und eine verbesserte Diagnosevorrichtung dringend benötigt werden, um in Zukunft Systeme, die noch mehr Komponenten und noch komplexere auf die Komponenten verteilte Funktionen aufweisen, angemessen diagnostizieren und warten zu können.

Die WO 2004/059407 A1 beschreibt ein Verfahren zur Diagnose von Betriebsfehlem in einer funktionalen Architektur, die eine Ansammlung von Funktionen umfasst, die mit elektronischen Komponenten verknüpft sind, die Daten erzeugen und nutzen, wobei mindestens ein Messwert einen vorfestgelegten besonderen Wert nach dem Auftreten einer fehlerhaften Arbeitsweise mindestens einer der Komponenten annehmen kann. Das Verfahren umfasst einen Schritt zum Bestimmen der besonderen Werte, in dessen Verlauf eine Liste der besonderen Werte erstellt wird, die mit Betriebsfehlem von Sensoren und Aktoren korrespondieren, einen Schritt zum Bestimmen der Fortpflanzung, in dessen Verlauf eine Liste der besonderen Werte erstellt wird, die eine Fortpflanzung des Informationsstroms betreffend die Betriebsfehler über die Funktionen gestattet; einen Schritt der Diagnose, in dessen Verlauf eine funktionelle Diagnose des Dienstes als Funktion der Listen aus den Schritten zum Bestimmen gebildet wird; und einen Schritt des Aufzeichnens der besonderen Werte und ihrer Fortpflanzung in einem Speicher für ein Werkzeug zur Validierung der besagten Architektur.

Aus der FR 2 775 806 A1 ist ein Informationswerkzeug zum Kodieren von elektrischen Architekturen, die für einen Einsatz im Inneren von Kraftfahrzeugen vorgesehen sind, beschrieben. Das Werkzeug ist ausgebildet, solche Architekturen im Hinblick auf die Vermeidung von Redundanzen zu optimieren.

Aus der WO 01/31448 A1 sind ein Verfahren und ein System zum Entwickeln eines voraussagenden Diagnosealgorithmus für eine Maschine beschrieben. Anhand der Auswertung von aufgetretenen Fehlern wird unter Hinzuziehung von Expertenrat ermittelt, welche Signale zu überwachen sind, um zukünftig Fehler voraussagen zu können.

Aus der DE 100 59 664 A1 sind ein Verfahren und eine Vorrichtung zur Fahrzeugfehlerdiagnose bekannt. Ein Computer für die Fahrzeugdiagnose wird mit einem Steuergerät eines Fahrzeugs und mit einem Server verbunden, der zur Fehlerdiagnose erforderliche Fehlerdiagnosedaten speichert Die Fehlerdiagnosedaten werden aus dem Server ausgelesen. Eine Fehlerdiagnose erfolgt In einem Dialogmodus mit dem Computer unter Verwendung der ausgelesenen Fehlerdiagnosedaten. Werden Fahrzeugdaten benötigt, so werden diese aus dem elektronischen Steuergerät unter Verwendung der ausgelesenen Fehlerdiagnosedaten automatisch erfasst.

Der Erfindung liegt daher die technische Aufgabe zugrunde, ein Diagnoseverfahren und eine Diagnosevorrichtung zu schaffen, mit denen eine vereinfachte und zielführende Diagnose von Systemen möglich wird, die vernetzte Komponenten umfassen, die Funktionen für das jeweilige System bereitstellen.

Die Aufgabe wird erfindungsgemäß durch ein Verfahren mit den Merkmalen des Patentanspruchs 1 sowie eine Vorrichtung mit den Merkmalen des Patentanspruchs 13 gelöst. Vorteilhafte Ausgestaltungen ergeben sich aus den Unteransprüchen.

Der Erfindung liegt der Gedanke zugrunde, dass eine verbesserte Diagnose erreicht werden kann, wenn von dem Prinzip der komponentenorientierten Diagnose zu einer funktionsorientierten Diagnose übergegangen wird. Um dies zu erreichen, wird ein Diagnoseverfahren für ein System mit Komponenten, die vernetzt sind und Funktionen bereitstellen, vorgeschlagen, bei dem für jede Komponente ein Komponentendiagnosedatensatz existiert, der Diagnoseinstanzen für die jeweiligen Komponenten und Funktionszuordnungseintrage umfasst, wobei die Funktionszuordnungseinträge Zuordnungen der Diagnoseinstanzen zu den Funktionen angeben. Das Diagnoseverfahren umfasst folgende Schritte:
- Ermitteln der Komponentendiagnosedatensätze der Komponenten des Systems;
- Transformieren der ermittelten Komponentendiagnosedatensätze in eine oder mehrere Funktionsdiagnosedatensätze, wobei jeder der Funktionsdiagnosedatensätze zumindest die Olagnoseinstanzeinträge aller Diagnoseinstanzen eines Diagnoseinstanztyps umfasst, die einer der Funktionen zugeordnet sind;
- Erfassen einer funktionsbezogenen Diagnoseanforderung; und
- Bereitstellen von Diagnosedaten, basierend auf der Diagnoseanforderung und mindestens einem der Funktionsdiagnosedatensätze, wobei die Diagnosedaten mindestens eine Information über jede der Diagnoseinstanzen des mindestens einen Diagnoseinstanztyps des mindestens einen Funktionsdatensatzes umfassen.

Die vernetzten Komponenten des Systems, das beispielsweise ein Kraftfahrzeug ist, stellen einzeln oder gemeinsam Funktionen für das System bereit. Für jede der Komponenten, die bei einem Kraftfahrzeug beispielsweise als Steuergeräte ausgebildet sind, existiert ein Komponentendiagnosedatensatz. In dem Komponentendiagnosedatensatz sind die einzelnen Diagnoseinstanzen für die jeweilige Komponente aufgeführt. Ferner sind die einzelnen Diagnoseinstanzen über Funktionszuordnungseinträge den Funktionen des Systems zugeordnet. Um eine Diagnose auszuführen, werden zunächst die Komponentendiagnosedatensätze der Komponenten des Systems ermittelt. Sobald ermittelt ist, welche Komponentendiagnosedatensätze zu den Komponenten des Systems gehören, werden diese in einen oder mehrere Funktionsdiagnosedatensätze transformiert. Vorzugsweise wird zu jeder Funktion, die das System aufweist, genau ein Funktionsdiagnosedatensatz gebildet. Jeder der Funktionsdiagnosedatensätze weist zumindest die Diagnoseinstanzeinträge aller Diagnoseinstanzen eines Diagnoseinstanztyps auf, die der Funktion zugeordnet sind, für die der Funktionsdiagnosedatensatz mittels des Transformierens erstellt wird. Nach der Transformation liegen somit Funktionsdiagnosedatensätze vor, in der die einzelnen Diagnoseinstanzen zusammengefasst sind, die zur Diagnose der jeweiligen Funktionen beitragen können. Das Diagnoseverfahren umfasst ferner den Schritt, eine funktionsbezogene Diagnoseanforderung zu erfassen. Dies kann beispielsweise dadurch erfolgen, dass eine fehlerhafte Funktion bezeichnet wird. Als eine Diagnoseanforderung wird jedoch auch eine Anforderung angesehen, die im Rahmen einer Systemwartung gezielt zu einem Zugriff auf Diagnoseinstanzen mindestens einer Komponente führen. Beispielsweise wird das Verändern, Zufügen oder Einfügen von Parametern in einen Speicher der Komponente mit dem Ziel, das Verhalten der Komponente zu verändern, als eine Diagnose in dem hier verwendeten Sinn angesehen. Basierend auf der Diagnoseanforderung und mindestens einem der Funktionsdiagnosedatensätze werden Diagnosedaten bereitgestellt. Die Diagnosedaten umfassen mindestens eine Information über jede der Diagnoseinstanzen des mindestens einen Diagnoseinstanztyps des mindestens einen Funktionsdatensatzes. Dies bedeutet, dass beispielsweise bei einer Diagnoseanforderung, die einen Fehler der Funktion Richtungsblinken angibt, beispielsweise sämtliche Messwerte der Komponenten (Steuergeräte) des Systems (Kraftfahrzeugs) angezeigt werden, die zu einer Eingrenzung der Ursache des Fehlers der Funktion Richtungsblinken beitragen können. Dieses sind die Messwerte, d.h. Diagnoseinstanzen, die der jeweiligen Funktion in den Komponentendiagnosedatensätzen zugeordnet sind. In der Regel wird die Transformation der Komponentendiagnosedatensätze in die Funktionsdiagnosedatensätze so ausgeführt, dass zu jeder Funktion genau ein Funktionsdatensatz existiert, der sämtliche Diagnoseinstanzen aller Komponenten des Systems umfasst, die zur Bereitstellung der jeweiligen Funktion beitragen. Hierbei werden nicht nur die Diagnoseinstanzen eines Diagnoseinstanztyps, beispielsweise alle Messwerte, die aus den Komponenten ausgelesen werden können, sondern auch sämtliche Parameter, Codierungen, Stellglieder, Kalibrierungen usw. in dem Funktionsdatensatz zusammengefasst. Über die Funktionsdiagnosedatensätze steht somit eine funktionsorientierte Sicht auf das System zur Diagnose bereit.

In einer Ausführungsform können die Diagnosedaten mit den Daten des Funktionsdiagnosedatensatzes identisch sein. Durch das Bereitstellen der funktionsorientierten Sichtweise auf das System ist es bei einer Diagnose, die basierend auf den Diagnosedaten ausgeführt wird, möglich, unnötige Diagnoseschritte auszusparen. Von den einzelnen Komponenten, die an der Bereitstellung der jeweiligen Funktion beteiligt sind, müssen nur diejenigen Diagnoseinstanzen diagnostiziert werden, die auch tatsächlich zur Bereitstellung der Funktion beitragen. Anhand der den Komponenten zugeordneten Komponentendiagnosedatensätze kann somit das Expertenwissen, was in diesen enthalten ist, in einer Weise aufbereitet werden, wie es für eine Diagnose benötigt wird, die in der Regel von einer funktionsorientierten Diagnoseanforderung ausgeht.

Die Diagnoseinstanzeinträge der Funktionsdiagnosedatensätze umfassen bei einer vorteilhaften Weiterbildung der Erfindung eine eindeutige Diagnoseinstanzkennung, die eine Kennung der jeweils zugehörigen Komponente oder eine Komponentendiagnosedatensatzkennung und eine Kennung der Diagnoseinstanz sowie vorzugsweise des Diagnoseinstanztyps umfasst. Eine vorteilhafte Ausgestaltung eines Diagnoseinstanzeintrags umfasst beispielsweise eine alphanumerische Kennung, die die Komponente angibt, eine alphanumerische Beschreibung der Diagnoseinstanz sowie ferner gegebenenfalls einen numerischen Index sowie gegebenenfalls eine alphanumerische Kennung für den Diagnoseinstanztyp. Eine Diagnoseinstanzkennung könnte beispielsweise folgendermaßen lauten "SG01 Versorgungsspannung Messwert", die eine Diagnoseinstanzkennung für einen Messwert der Versorgungsspannung des Steuergerätes 1 ist. Beliebig anders aufgebaute Kennzeichnungssysteme können verwendet werden. Insbesondere wenn die einzelnen Bestandteile der Diagnoseinstanzkennung mnemotechnisch günstig gewählt sind, kann den Diagnoseinstanzeinträgen bereits aus der Diagnoseinstanzkennung eine Bedeutung zugeordnet werden. Zusätzlich kann der Diagnoseinstanzeintrag auch eine Beschreibung für die jeweilige Diagnoseinstanz umfassen.

Um eine Diagnose möglichst automatisiert ausführen zu können, umfassen die Komponentendiagnosedatensätze bei einer bevorzugten Ausführungsform für die Diagnoseinstanzen jeweils Diagnoseaktionsdaten, die zum Steuern mindestens einer Diagnoseaktion für die entsprechende Diagnoseinstanz verwendbar sind. Die Diagnoseaktionsdaten können beispielsweise die notwendigen Informationen umfassen, die benötigt werden, um ein Stellglied zu betätigen oder einen Messwert auszulesen. Um die Funktionsdiagnosedatensätze kompakt und klein zu halten, umfassen die Diagnoseinstanzeinträge bevorzugt eine Verweisung auf den entsprechenden Komponentendiagnosedatensatz. Dies bedeutet, dass die Diagnoseinstanzeinträge in den Funktionsdiagnosedatensätzen beispielsweise einen Zeiger umfassen, der innerhalb des Komponentendiagnosedatensatzes die entsprechenden Diagnoseaktionsdaten identifiziert. Die Diagnoseaktionsdaten eines Komponentendiagnosedatensatzes können beispielsweise eine ausführbare Codesequenz umfassen, die auf einem Mikroprozessor der jeweiligen Komponente ausgeführt werden muss, um die Diagnoseinstanz zu diagnostizieren. So können die Aktionsdaten beispielsweise den ausführbaren Code umfassen, der ein bestimmtes, dem Steuergerät zugeordnetes Stellglied ansteuert.

Eine schnelle, zügige und automatisierte Diagnose lässt sich mit einer Weiterbildung des Diagnoseverfahrens ausführen, bei der für alle die Diagnoseinstanzen eines Diagnoseinstanztyps einer Funktion anhand der entsprechenden Diagnoseaktionsdaten jeweils mindestens eine der Diagnoseaktionen im Zusammenwirken mit den jeweiligen Komponenten parallel und/oder sequenziell ausgeführt werden. Gegenüber den Verfahren im Stand der Technik besteht der besondere Vorteil, dass die Diagnoseinstanzen unterschiedlicher Komponenten auch parallel diagnostiziert werden können. So können beispielsweise sämtliche Messwerte, die zur Diagnose einer Funktion beitragen, aus den unterschiedlichen Komponenten parallel und/oder sequenziell ausgelesen werden. Die hierfür erforderlichen Informationen sind in den Diagnoseaktionsdaten enthalten. Diese können in einer Ausführungsform in die Diagnosefunktionsdatensätze integriert sein. In anderen vorteilhaften Ausführungsformen umfassen die Funktionsdiagnosedatensätze jedoch nur einen Verweis auf den entsprechenden Komponentendiagnosedatensatz, so dass auf die Diagnoseaktionsdaten über den Verweis in die Komponentendiagnosedatensätze zugegriffen werden kann. Auch wenn die einzelnen Komponenten nur über ein serielles Netzwerk oder über einen seriellen Datenbus miteinander vernetzt sind, kann ein paralleles Ausführen der Diagnoseaktionen stattfinden. Wird eine Diagnoseaktion angestoßen, bevor eine zuvor angestoßene Diagnoseaktion vollständig ausgeführt worden ist, so liegt ein paralleles Ausführen von Diagnoseaktionen vor. Beispielsweise kann eine als Steuergerät ausgebildete Komponente mittels der Diagnoseaktionsdaten dazu veranlasst werden, einen Messwert bereitzustellen. Eine andere Komponente kann dann aufgefordert werden, einen anderen Messwert bereitzustellen. Erfolgt diese Aufforderung, bevor der Messwert von dem einen Steuergerät bereitgestellt ist, so findet ein paralleles Ausführen von Diagnoseaktionen statt.

Diagnoseaktionen können u.a. ein Auslesen eines Diagnoseinstanzwertes, ein Schreiben/Setzen eines Diagnoseinstanzwertes oder ein Betätigen eines Stellglieds umfassen. Ein Diagnoseinstanzwert kann in dem hier verwendeten Sinn auch ein Satz von Daten sein. Diagnoseinstanzen können beispielsweise Messwerte, Parameter oder Parametersätze, Codierungen oder Codierungssätze, Stellglieder und/oder Kalibrierungen umfassen. Beispielsweise ist das Schreiben/Setzen von Parametern, Parametersätzen, Codierungen oder Codierungssätzen sowie Kalibrierungen ein Schreiben/Setzen eines Diagnoseinstanzwertes. Ebenso ist das Auslesen dieser Diagnoseinstanzen oder das Auslesen von Messwerten ein Auslesen von Diagnoseinstanzwerten.

Bei einer bevorzugten Ausführungsform wird das Diagnoseverfahren mittels einer Diagnosevorrichtung ausgeführt, die kommunikationstechnisch mit dem System verbunden wird, das diagnostiziert wird.

Eine anwenderfreundliche Ausführung des Diagnoseverfahrens ist so ausgestaltet, dass die Diagnosedaten in einer funktional gegliederten baumartigen Ansicht auf einem Anzeigegerät ausgegeben werden. Eine solche Ansicht oder Darstellung kann beispielsweise sämtliche Funktionen eines Fahrzeugs darstellen, an deren Bereitstellung mindestens eine Komponente des Systems beteiligt ist. Hierbei können auch solche Funktionen aufgeführt werden, die nicht vollständig in dem Fahrzeug implementiert sind oder nicht über eine Codierung freigeschaltet sind. So ist es heute bereits üblich, dass in Kraftfahrzeuge Komponenten verbaut werden, die eine Vielzahl von Funktionen der Teilfunktionen bereitstellen können. Die eigentliche Funktion ist jedoch nur ausführbar, wenn das System Komponenten umfasst, die alle Teilfunktionen der Funktion bereitstellen können. Darüber hinaus ist es üblich, dass bestimmte Teilfunktionen oder Funktionen von der Komponente nur bereitgestellt werden, wenn diese Funktion über eine Codierung "freigeschaltet" ist. Das Anzeigen dieser nicht vollständig implementierten Funktionen weist jedoch den Vorteil auf, dass ein möglicher Fehler, der mit einer Funktion verknüpft ist, gerade darin liegen kann, dass beispielsweise bei einer Komponente, die eine Teilfunktion für die zu diagnostizierende Funktion bereitstellt, die Codierung falsch ist, so dass die von dieser Komponente bereitzustellende Teilfunktion nicht nutzbar ist.

Ferner weist eine baumartige Ansicht oder Darstellung der Funktionen den Vorteil auf, dass die Funktionen und ihre Unterfunktionen hierarchisch gegliedert dargestellt werden können. Abhängigkeiten von Funktionen können so von einem Nutzer leicht erfasst werden. Um eine solche hierarchische Darstellung zu unterstützen, kann es vorgesehen sein, dass den einzelnen Funktionen Kennungen zugewiesen sind, anhand derer die übergeordneten Funktionen bzw. Funktionsfamilien oder Funktionsbereiche identifizierbar sind. Ebenso kann vorgesehen sein, dass anhand der Kennungen Unterfunktionen identifizierbar sind. Auf diese Weise sind ferner Funktionsabhängigkeiten leicht erfassbar und darstellbar. Wird beispielsweise in einer Funktion ein Fehler festgestellt, so werden ebenfalls der Funktionsbereich und/oder die Funktionsfamilie, der und/oder denen die Funktion zugeordnet ist, ebenfalls als fehlerhaft in der Darstellung gekennzeichnet.

Bei einer externen Diagnosevorrichtung sind die Übertragungsraten zwischen dem System und der Diagnosevorrichtung in der Regel begrenzt. Da eine Diagnose möglichst schnell erfolgen soll, sieht eine bevorzugte Ausführungsform der Erfindung vor, dass die Komponentendiagnosedatensätze, soweit es möglich ist, aus einer Datenbank der Diagnosevorrichtung abgerufen werden. Eine vorteilhafte Ausführungsform der Diagnosevorrichtung umfasst somit eine Speichervorrichtung, in der die Komponentendiagnosedatensätze in einer Datenbank gespeichert sind. Diese umfasst in der Regel Komponentendiagnosedatensätze von unterschiedlichen Modellen und/oder Ausführungsformen des Systems. Um zu identifizieren, welche Komponentendiagnosedatensätze mit den im System verbauten Komponenten korrespondieren, ist es vorgesehen, dass zum Ermitteln der Komponentendiagnosedatensätze der Komponenten eine Verbauliste des Systems ausgelesen wird oder von jeder Komponente die zugehörige Komponentendiagnosedatensatzkennung ausgelesen wird. Eine solche Komponentendiagnosedatensatzkennung wird eineindeutig vergeben. In der Regel ist der Komponentendiagnosedatensatz ebenso in jeder Komponente abgespeichert. Dieses ist jedoch nicht unbedingt erforderlich. Für den Fall, dass die Datenbank vollständig ist und sämtliche Komponentendiagnosedatensätze der Komponenten, die in dem System verbaut sind, umfasst, kann die Transformation in Funktionsdatensätze anhand der Komponentendiagnosedatensätze aus der Datenbank der Diagnosevorrichtung erfolgen. Für den Fall, dass einer oder alle Komponentendiagnosedatensätze nicht in der Datenbank enthalten sind, müssen diese aus den Komponenten oder einem Speicher des Systems ausgelesen werden. Die Komponentendiagnosedatensätze ebenfalls in dem System, beispielsweise in den Komponenten oder einem zentralen Speicher des Systems, vorzuhalten, bietet den Vorteil, dass eine Diagnose auch mit Diagnosevorrichtungen möglich ist, deren Datenbank nicht aktuell ist, d.h. die einen Komponentendiagnosedatensatz einer Komponente, die in dem Fahrzeug verbaut ist, nicht umfasst.

Aufgrund einer Modell- und Variantenvielzahl der Systeme, beispielsweise wenn die Systeme Kraftfahrzeuge sind, ist es nicht sinnvoll, die mittels der Transformation erzeugten Funktionsdatensätze langfristig über den Zeitraum hinaus zu speichern, der für die Diagnose des Systems benötigt wird. Der für die Diagnosevorrichtung notwendige Speicherplatz, um sämtliche Funktionsdiagnosedatensätze von unterschiedlichen Modellen eines Systems zu speichern, ist in der Regel viel höher, als der Speicherbedarf, der benötigt wird, um die Komponentendiagnosedatensätze abzulegen. Die Ursache hierfür liegt darin, dass in unterschiedlichen Modellen gleiche Komponenten verwendet werden, die jedoch häufig dieselbe Funktion im Zusammenwirken mit unterschiedlichen Komponenten in den unterschiedlichen Modellen bereitstellen.

Die Merkmale der erfindungsgemäßen Vorrichtung weisen dieselben Vorteile wie die entsprechenden Merkmale des erfindungsgemäßen Verfahrens auf.

Nachfolgend wird die Erfindung anhand von Ausführungsbeispielen unter Bezugnahme auf Figuren einer Zeichnung näher erläutert. Hierbei zeigen:
- Fig. 1: ein System mit Komponenten, das mit einer Diagnosevorrichtung gekoppelt ist, wobei die Komponenten unterschiedliche Funktionen bereitstellen;
- Fig. 2: eine Darstellung des Systems nach Fig. 1. bei dem die Funktionsabhängigkeiten hervorgehoben sind;
- Fig. 3: eine funktionsorientierte Darstellung der Abhängigkeiten der Funktionen von den Komponenten beim dem System nach Fig. 1 und 2;
- Fig. 4: eine schematische Darstellung eines Ablaufdiagramms einer Systemdiagnose nach dem Stand der Technik;
- Fig. 5: eine schematische Darstellung eines Systementwicklungs- und Diagnoseverfahrens für eine funktionsorientierte Diagnose;
- Fig. 6: schematische Darstellung einer Diagnosevorrichtung, die mit einem zu diagnostizierenden System gekoppelt ist; und
- Fig. 7: eine schematische Darstellung einer baumartigen Ansicht bzw. Darstellung von Diagnosedaten.

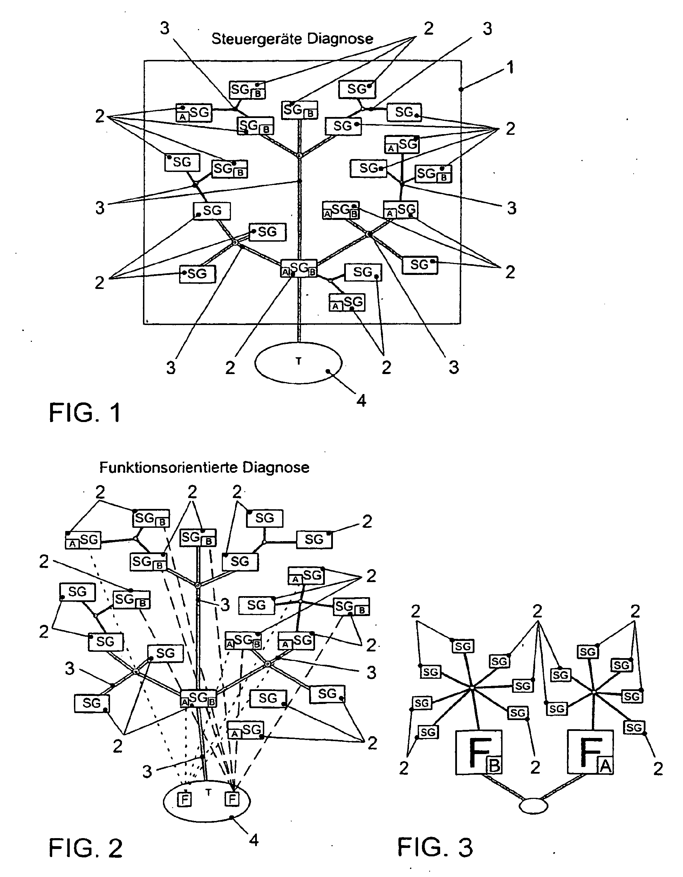

In Fig. 1 ist ein System 1 dargestellt, das beispielsweise als Kraftfahrzeug ausgestaltet sein kann. Das System 1 umfasst Komponenten 2. Die Komponenten 2 sind über ein Bussystem 3 miteinander verknüpft. Bei einer anderen Ausführungsform können die Komponenten 2 über mehrere Bussysteme verknüpft sein. Die Komponenten 2 sind beispielsweise als Steuergeräte ausgebildet. Einige der Steuergeräte stellen für das System 1 gemeinsam eine Funktion A bereit. Eine andere Teilmenge der Steuergeräte stellt eine Funktion B bereit. Die Buchstaben "A" und "B" in den Komponenten 2 geben jeweils an, dass die jeweilige Komponente 2 an der Bereitstellung der jeweiligen Funktion A und/oder B beteiligt ist. Eine Diagnosevorrichtung 4 ist mit einer der Komponenten 2 des Systems 1 kommunikationstechnisch verbunden. Mittels der Diagnosevorrichtung 4 ist es möglich, die einzelnen Komponenten 2 des Systems 1 zu diagnostizieren.

Wie in Fig. 1 leicht zu erkennen ist, ist eine Kenntnis der tatsächlichen physikalischen Verknüpfungen der Komponenten 2 in dem System 1 für eine Analyse der Funktionen A und B, die von unterschiedlichen Teilmengen der Komponenten 2 des Systems 1 bereitgestellt werden, nicht notwendig oder hilfreich.

In Fig. 2 ist das System 1 mit der Diagnosevorrichtung 4 nach Fig. 1 erneut dargestellt. In den Figuren sind jeweils gleiche technische Merkmale mit denselben Bezugszeichen versehen. Zusätzlich sind in Fig. 2 die Abhängigkeiten der Funktionen A und B von den einzelnen Teilmengen der Komponenten 2 graphisch dargestellt. Zuordnungen der als Steuergeräte ausgebildeten Komponenten 2, die die Funktion A bereitstellen, sind über gepunktete Linien, Zuordnungen der als Steuergeräte ausgebildeten Komponenten 2, die die Funktion B bereitstellen, sind mittels gestrichelter Linien dargestellt.

In Fig. 3 ist diese Sichtweise funktionsorientiert für die Funktionen A und B dargestellt. Soll die Funktion B diagnostiziert werden, so ist es lediglich von Interesse, die Komponenten 2 einfach herausfinden zu können, die an der Bereitstellung der Funktion B beteiligt sind. Dieses Wissen soll unabhängig davon bereitstehen, von weichen Komponenten das Bereitstellen der Funktion A abhängig ist. Daher kann in dieser Darstellung ein und dasselbe Steuergerät mehrfach dargestellt sein.

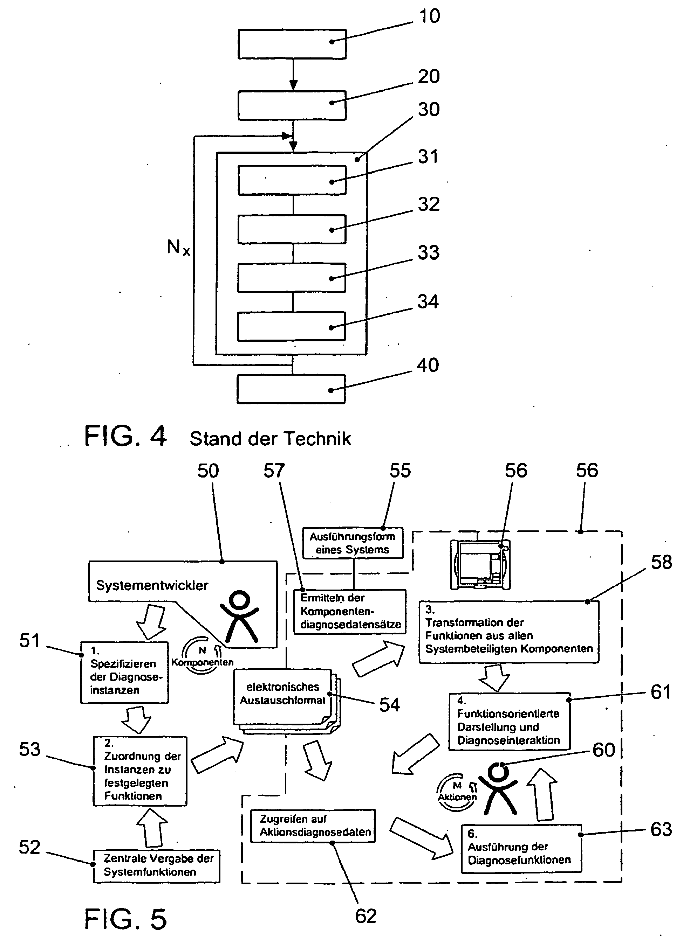

Anhand des schematischen Blockdiagramms von Fig. 4 soll ein klassisches Diagnoseverfahren nach dem Stand der Technik erläutert werden. Zunächst wird eine Diagnoseanforderung 10 gestellt und erfasst. Die Diagnoseanforderung kann beispielsweise eine Fehlerbeschreibung sein. Die Fehlerbeschreibung ist funktionsorientiert, da ein Nutzer des Systems an einer Nutzung der bereitgestellten Funktionen interessiert ist.

Gemäß der Diagnoseanforderung muss nun ermittelt werden, welche Komponenten des Systems an einer Bereitstellung der durch die Diagnoseanforderung beschriebenen Funktion beteiligt sind 20. Dies ist heutzutage beispielsweise bei Systemen, die als Kraftfahrzeuge ausgebildet sind, häufig nur schwierig möglich, da dieses Expertenwissen über das Zusammenwirken der einzelnen Komponenten den Personengruppen, die für die Wartung des Systems zuständig sind (Werkstätten), häufig nicht vollständig zur Verfügung steht. Ist die Ermittlung nicht oder nicht vollständig möglich, müssen nach dem Stand der Technik in den nachfolgenden Diagnoseschritten Komponenten überflüssigerweise mit einbezogen werden, die an der Bereitstellung der fehlerhaften Funktion nicht beteiligt sind.

Anschließend wird für die einzelnen ermittelten Komponenten des Systems jeweils eine Diagnosesequenz 30 ausgeführt. Die Diagnosesequenz 30 umfasst zunächst ein Auswählen einer der ermittelten Komponenten 31. Anschließend wird eine Diagnoseinstanz, beispielsweise ein Messwert, ausgewählt 32. Anschließend wird diese Diagnoseinstanz diagnostiziert, beispielsweise der Messwert ausgelesen 33. Anschließend wird die ausgewählte Komponente analysiert 34. Diese Diagnosesequenz 30 wird nun für die weiteren Komponenten wiederholt. Sind beispielsweise N Komponenten an der Bereitstellung der durch die Diagnoseanforderung als fehlerhaft gekennzeichneten Funktion beteiligt, so wird diese Diagnosesequenz 30 mindestens N-mal durchlaufen. Da das Expertenwissen über die beteiligten Komponenten in der Regel nicht in einer elektronischen Form oder zumindest nicht in der Weise vorliegt, dass das Durchlaufen dieses Verfahrensabschnitts 30 automatisiert erfolgen kann, ist die Ausführung zeitintensiv und arbeitskräfteintensiv. Anhand der Analyseergebnisse der einzelnen Komponenten 2, die bei den einzelnen Durchläufen der Diagnosesequenz 30 erhaltenen wurden, kann eine Analyse bzw. Diagnose der Funktion durchgeführt werden 40. Auch hierfür ist häufig wieder Expertenwissen notwendig, wenn beispielsweise ein Fehler durch eine Messwertekombination zweier unterschiedlicher Komponenten gegeben ist, die für sich jeweils, sofern nur die Komponente betrachtet wird, plausibel und nicht als fehlerhaft kennzeichenbar sind.

Anhand von Fig. 5 wird erläutert, wie ein System entwickelt werden kann, das für eine funktionsorientierte Diagnose optimal vorbereitet ist. Ferner wird anhand von Fig. 5 eine Ausführungsform eines funktionsorientierten Diagnoseverfahrens erläutert. Ein Systementwickler 50 spezifiziert zunächst für N-Komponenten Diagnoseinstanzen 51. Ein übergeordnetes Entwicklungsgremium legt zentral die Funktionen fest, die ein aus den Komponenten zusammengesetztes System oder unterschiedliche Systeme besitzen sollen 52. Der Systementwickler ordnet den Diagnoseinstanzen der einzelnen Komponenten jeweils Funktionen zu 53. Hierbei können einzelne Diagnoseinstanzen mehreren Funktionen zugeordnet werden. Die Diagnoseinstanzen und Funktionszuordnungseinträge, die die Diagnoseinstanzen den Funktionen zuordnen, werden in Komponentendiagnosedatensätzen 54 zusammengefasst, die in einem elektronischen Austauschformat vorliegen. Jeder Komponente ist ein Komponentendiagnosedatensatz 54 zugeordnet. Die Komponentendiagnosedatensätze sind vorteilhafterweise in einer Datenbank einer Diagnosevorrichtung 56 gespeichert. In der Ausführungsform des Systems 55 sind vorteilhafterweise nur die Komponentendiagnosedatensätze, beispielsweise in den Komponenten, gespeichert, die zu den jeweiligen Komponenten gehören. Ferner ist vorteilhafterweise eine Verbauliste in der Ausführungsform des Systems 55 abgelegt, anhand derer die Komponentendiagnosedatensätze ermittelt werden können, die zu den Komponenten der Ausführungsform des Systems 55 gehören.

Existiert das entwickelte System, beispielsweise ein Kraftfahrzeug, in unterschiedlichen Varianten oder Modellen, so existieren in der Regel mehr Komponenten als in der einen Ausführungsform des Systems 55 verbaut sind. Die Datenbank enthält jedoch möglichst alle Komponentendiagnosedatensätze, die existieren. Für eine funktionsorientierte Diagnose mit einer Diagnosevorrichtung 56 ist es daher zunächst notwendig, die Komponentendiagnosedatensätze zu ermitteln, die zu den Komponenten gehören, die in der Ausführungsform des Systems 55 tatsächlich verbaut sind 57. Das Ermitteln kann erfolgen, indem die elektronisch in dem System 55 abgelegte Verbauliste ausgelesen wird oder indem die einzelnen Komponenten aufgefordert werden, ihre Kennung oder eine Komponentendiagnosedatensatzkennung an die Diagnosevorrichtung 56 zu übermitteln, in der die Systemdiagnose ausgeführt wird. Sobald die Komponentendiagnosedatensätze ermittelt sind, werden so genannte Funktionsdiagnosedatensätze (FDX) aus den ermittelten Komponentendiagnosedatensätzen der Komponentendiagnosedatensätzen 54 transformiert 58. Anschließend ist es möglich, eine funktionsorientierte Diagnose auszuführen. Hierbei wird eine Diagnoseanforderung von einem Nutzer 60 erfasst. Die transformierten Funktionsdiagnosedatensätze umfassen sämtliche Diagnoseinstanzen einer Funktion. Den einzelnen Diagnoseinstanzen sind bei einer vorteilhaften Ausgestaltung Verweise oder Verknüpfungen, beispielsweise in Form von Zeigern, in die Komponentendiagnosedatensätze 54 in den Diagnoseinstanzeinträgen zugeordnet. Wird mittels der Diagnoseanforderung die Diagnose beispielsweise einer Funktion A angefordert, so können sämtliche Diagnoseinstanzen, die der Funktion A zugeordnet sind, in Form von Diagnosedaten bereitgestellt werden 61. Anhand dieser Diagnosedaten ist es möglich, dass automatisiert eine Diagnose des Systems ausgeführt wird. Hierzu sind von dem Systementwickler 50 in die Komponentendiagnosedatensätze Diagnoseaktionsdaten eingefügt. Mit Hilfe dieser Diagnoseaktionsdaten, auf die über die Verknüpfungen, beispielsweise Zeiger, zugegriffen werden kann 62, ist es möglich, die einzelnen Diagnoseinstanzen zu diagnostizieren 63. Die Diagnoseaktionsdaten enthalten beispielsweise die notwendigen Informationen, um einen Messwert aus einer Komponente auszulesen, sofern die zugehörige Diagnoseinstanz ein Messwert ist. Ist die zugehörige Diagnoseinstanz ein Stellglied, so kann dieses Stellglied mittels der zugehörigen Diagnoseaktionsdaten betätigt werden. Um die Diagnose vollständig ausführen zu können, können M Diagnoseaktionen notwendig sein. Bei einigen Diagnoseinstanztypen ist es möglich, dass die Diagnoseaktionsdaten unterschiedliche Aktionen ermöglichen. Handelt es sich bei der Diagnoseinstanz beispielsweise um Parameter, so können die Diagnoseaktionsdaten zum einen die Aktion Auslesen des Parameters umfassen und andererseits die Aktion Setzen/Schreiben des Parameters. Bei den Diagnoseinstanzen kann es sich um Messwerte, Parameter, Codierungen, Kalibrierungen, Stellglieder oder Ereigniseinträge usw. handeln. Der große Vorteil des funktionsorientierten Diagnoseverfahrens liegt darin, dass sowohl der Nutzer als auch derjenige, der die Diagnose durchführt, jeweils funktionsorientiert arbeiten oder denken.

Nachfolgend wird auf die Diagnose von Codierungen der Komponenten eingegangen.

Eine Codierung einer Funktion enthält verschiedenste Parameter, die abhängig von der jeweiligen Funktion und den Komponenten ist, die zu ihrer Bereitstellung mitwirken. Die Codierung erfolgt über Codierwerte. Die Codierwerte sind einer Funktion, einem Funktionsbereich, einer Funktionsfamilie usw. eindeutig zugewiesen. Dieses bedeutet, dass zwei Funktionen nicht den gleichen Codierwert verwenden dürfen, es sei denn, bei dem Codierwert handelt es sich um einen funktionsübergreifenden Codierwert, einer Funktionsfamilie oder eines Funktionsbereichs, dem beide Funktionen angehören.

Die Codierwerte werden in einer zentral geführten Rahmencodiertabelle verwaltet. Bei der Entwicklung des Systems müssen zunächst die Codierwerte in der Rahmencodiertabelle erfasst werden, bevor sie zur Codierung von Funktionen verwendet werden dürfen. In der Rahmencodiertabelle werden die Codierwerte mit den einzelnen Funktionen verknüpft.

In jeder Komponente ist ein Gesamtcodierwert abgelegt, der die Codierwerte aller Funktionen umfasst, an deren Bereitstellung das Steuergerät beteiligt ist. Der Gesamtcodierwert kann als eine binäre Zahl ausgebildet sein, die sich aus den einzelnen Codierwerten zusammengesetzt oder errechnet ist. Die Codierwerte sind wiederum durch die von dem Steuergerät bereitgestellten Funktionen und das Steuergerät selbst festgelegt. Der Gesamtcodierwert, kann auch eine Liste sein, in dem die Codierwerte des Steuergeräts zusammengefasst sind. Anhand des Gesamtcodierwerts ist festgelegt, welche Funktionen oder Teilfunktionen das Steuergerät bereitstellt. Insbesondere bei Komponenten, bei denen der Gesamtcodierwert eine binäre Zahl ist, die aus mehreren Codierwerten zu errechnen ist, ist eine Überprüfung oder Änderung der Codierung einer Komponente mit einem Verfahren nach dem Stand der Technik aufwendig und erfordert Expertenwissen. Eine Codierung mehrer Komponenten, um eine neue Funktion in dem System frei zu schalten, ist daher sehr aufwendig, selbst wenn hierfür allen beteiligten Komponenten jeweils nur ein und derselbe Codierwert zuzuweisen ist. Nachfolgend wird eine bevorzugte Ausführungsform eines Diagnoseverfahrens beschrieben, die diese Nachteile nach dem Stand der Technik nicht aufweist.

Bei der bevorzugten Ausführungsform eines Diagnoseverfahrens, bei dem eine Codierung einer Funktion diagnostiziert, beispielsweise abgefragt oder geändert, wird, werden anhand der Komponentendiagnosedatensätze die Codierwerte ermittelt, die den der zu diagnostizierenden Funktion zugeordnet sind. Dieses erfolgt, indem aus den ermittelten Komponentendiagnosedatensätzen des Systems ein Funktionsdiagnosedatensatz für die Funktion im Rahmen der Transformation der Komponentendiagnosedatensätze in Funktionsdiagnosedatensätze bestimmt wird. In dem Funktionsdiagnosedatensatz sind die Codierwerte aufgeführt, die der Funktion zugeordnet sind. Hierbei sind vorzugsweise für jeden Codierwert die Komponenten angegeben, in deren Gesamtcodierwert der Codierwert integriert sein muss, damit die Funktion von dem System bereitgestellt wird. Sofern sich der Codierwert auf alle . Komponenten bezieht, kann eine solche Angabe entfallen.

Anhand dieser Angaben kann nun eine funktionsbezogene Diagnose bezüglich der Codierung der Funktion durchgeführt werden. Die den Codierwerten in den Komponentendiagnosedatensätzen zugeordneten Diagnoseaktionsdaten enthalten die notwendigen Informationen, um die Gesamtcodierwerte der betreffenden Komponenten automatisiert parallel oder sequenziell auszulesen und die entsprechenden Codierwerte aus den Gesamtcodierwerten zu extrahieren. Ist die Funktion beispielsweise in keiner der erforderlichen Komponenten frei geschaltet, so wird das Ergebnis dieser Diagnoseaktionen.sein, dass der oder die Codierwerte nicht in den Gesamtcodierwerten enthalten bzw. in diese integriert sind. So lässt sich ein Funktionsfehler, der auf einer falschen Codierung beruht einfach feststellen. Soll die Funktion anschließend frei geschaltet werden, so werden die Codierwerte aus dem Funktionsdiagnosedatensatz verwendet, um gemeinsam mit den Diagnoseaktionsdaten für jede der beteiligten Komponenten den oder die Codierwerte in die entsprechenden Gesaamtcodierwerte zu integrierern und in die jeweiligen Komponenten in den dafür vorgesehenen Speicherstellen abzulegen. Hierdurch wird eine enorme Vereinfachung und Beschleunigung der codierwertbezogenen Diagnose erreicht.

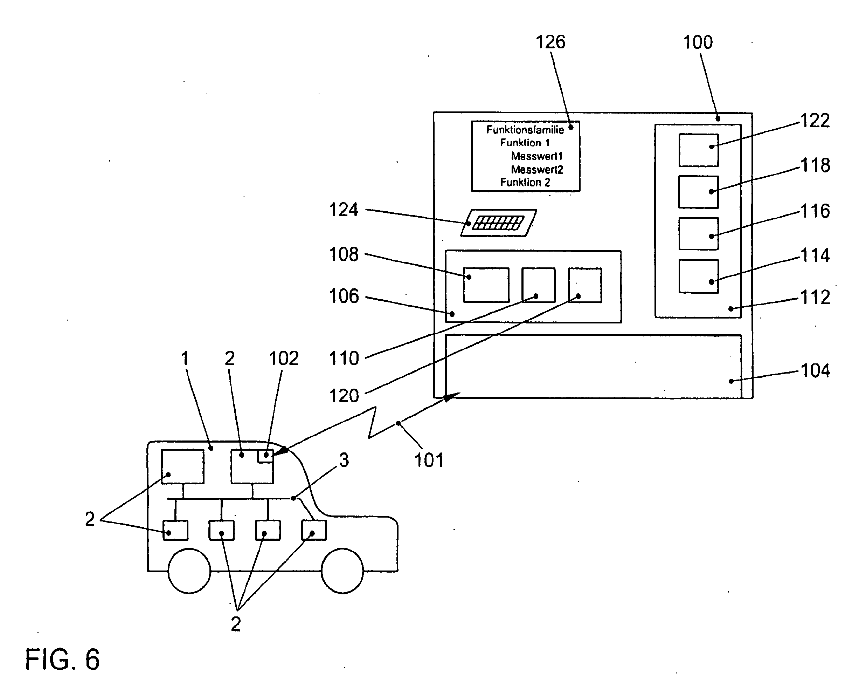

In Fig. 6 ist eine Ausführungsform einer Diagnosevorrichtung 100 dargestellt. Die Diagnosevorrichtung 100 ist mit einem System 1, das als Kraftfahrzeug ausgebildet ist, kommunikationstechnisch verknüpft. Das Kraftfahrzeug umfasst Komponenten 2, die über ein Bussystem 3 miteinander vernetzt sind. Eine der Komponenten 2 umfasst eine Schnittstelle 102, über die die kommunikationstechnische Verbindung 101 mit der Diagnosevorrichtung 100 zu einer Schnittstelle 104 ausgebildet ist. Auf die Schnittstelle 104 setzt ein Framework 106 auf, in dem unterschiedliche Anwendungen 108, 110 ausführbar sind. Eine Anwendung 108 ist beispielsweise für eine komponentenorientierte Diagnose ausgebildet. Eine weitere Anwendung 110 ist zum Ausführen eines funktionsorientierten Diagnoseverfahrens ausgebildet. Die weitere Anwendung kann im übertragenen Sinne auch als eine Steuereinheit betrachtet werden. Die Diagnosevorrichtung 100 umfasst einen Speicher 112, in dem u.a. die zur Ausführung der Anwendungen 108 und 110 benötigten Programmdaten 114, 116 abgelegt sind. Ferner umfasst der Speicher einen Bereich, in dem eine Datenbank 118 abgelegt ist, in der wiederum die Komponentendiagnosedatensätze vorzugsweise in einem ODX- ("Open Diagnostic Data Exchange")-Datenformat abgelegt sind. Das funktionsorientierte Diagnoseverfahren ist so ausgestaltet, dass es zunächst ermittelt, welche Komponentendiagnosedatensätze zu den Komponenten 2 des Systems 1 gehören. Über einen Konverter 120, der hier aus Gründen der Veranschaulichung als eigenständige Anwendung dargestellt ist und auch als Transformationseinheit bezeichnet wird, werden aus den zugehörigen Komponentendiagnosedatensätzen Funktionsdiagnosedatensätze für die Funktionen erstellt, denen Diagnoseinstanzen in den Komponentendiagnosedatensätzen zugeordnet sind. Diese werden vorzugsweise in einer temporären Datenbank 122 in dem Speicher 112 abgelegt. Es ist auch eine Ausführungsform denkbar, in der die Funktionsdiagnosedatensätze in die. Datenbank 118 integriert werden. Über eine Eingabeeinrichtung 124, beispielsweise eine Tastatur, wird eine Diagnoseanforderung erfasst. Gemäß der Diagnoseanforderung werden basierend auf den Funktionsdiagnosedatensätzen Diagnosedaten bereitgestellt, die auf einer Anzeige 126, beispielsweise einem Bildschirm, graphisch dargestellt werden. Die Diagnosedaten können ebenfalls in elektronischer Form bereitgestellt werden. Die Anzeige 126 ist lediglich eine mögliche Ausgestaltung einer Bereitstellungseinheit. Die Diagnosedaten können lediglich Informationen über die Diagnoseinstanzen umfassen, von denen die Funktion abhängig ist, die gemäß der Diagnoseanforderung diagnostiziert werden soll. Ebenso ist es möglich, dass zuvor die einzelnen Diagnoseinstanzen diagnostiziert werden. Hierfür werden über Verknüpfungen die in den Komponentendiagnosedatensätzen enthaltenen Diagnoseaktionsdaten zum Ausführen von Diagnoseaktionen im Zusammenwirken mit den Komponenten 2 des Systems 1 verwendet. Die Diagnosedaten können in einem solchen Fall bereits die Ergebnisse der Diagnose umfassen. Eine Darstellung auf der Anzeige 126 erfolgt vorzugsweise in einer baumartigen Darstellung.

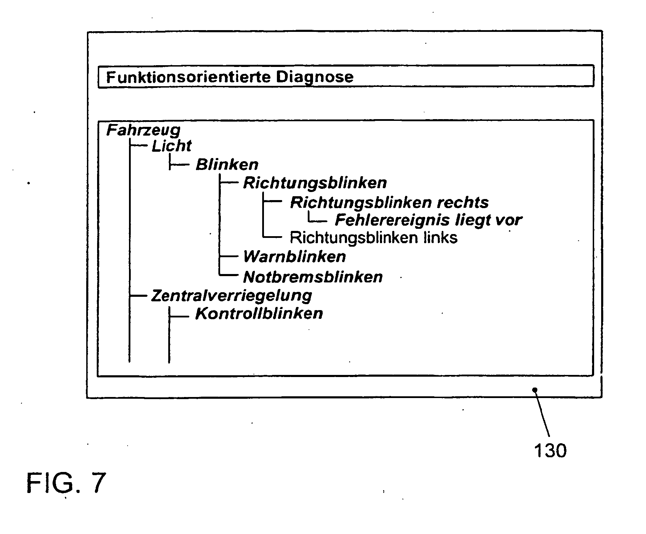

In Fig. 7 ist eine beispielhafte baumartige Darstellung von Diagnosedaten auf einem Anzeigegerät 130 gezeigt. Eine baumartige Darstellung ermöglicht ein schnelles Erfassen der Diagnoseergebnisse. Insbesondere funktionale Abhängigkeiten lassen sich einfach und übersichtlich darstellen. Ist eine Funktion fehlerhaft, so werden vorzugsweise die übergeordnete Funktionsfamilie und der entsprechende Funktionsbereich ebenfalls als fehlerhaft dargestellt. In dem in Fig. 7 dargestellten Beispiel ist ein Fehlerereignis in einer Komponente aufgetreten, die an der Bereitstellung des Richtungsblinkens rechts beteiligt ist. Die übrigen dargestellten Funktionen oder Funktionsfamilien etc. bis auf die Funktion Richtungsblinken links sind von diesem Fehler beeinflusst. Diese lässt sich anhand der Funktionsdiagnosedatensätze leicht ermitteln. Es sind alle Funktionen betroffen, in deren Funktionsdiagnosedatensatz ebenfalls die Diagnoseinstanz auftritt, die das Fehlerereignis anzeigt. Die Fehlerhaften Funktionen und Funktionsgruppen sind durch Fettdruck und Kursivstellung hervorgehoben. Wie sich aus dieser Ausführungsform ergibt, ist es somit vorteilhaft, in den Diagnosedatensätzen auch die Zugehörigkeit der Diagnoseinstanzen zu den über geordneten und/oder untergeordneten Funktionen oder Funktionsfamilien etc. aufzunehmen, so dass auch für dies Funktionsdiagnosedatensätze ermittelbar sind. Diese ist gleichbedeutend mit einer Behandlung der Funktionsfamilien, Funktionsgruppen usw. als eigenständige Funktionen. Für das System kann vorteilhafterweise ebenfalls eine Funktion "System" definiert werden, die als Stammfunktion aller Funktionen dienen kann.

## Patentansprüche

1. Diagnoseverfahren für ein System (1) mit Komponenten (2), die vernetzt sind und Funktionen bereitstellen, wobei für jede Komponente (2) ein Komponentendiagnosedatensatz (54) existiert, der Diagnoseinstanzen für die jeweilige Komponente (2) und Funktionszuordnungseinträge umfasst, wobei die Funktionszuordnungseinträge Zuordnungen der Diagnoseinstanzen zu den Funktionen angeben, umfassend die Schritte:
a. Ermitteln (57) der Komponentendiagnosedatensätze (54) der Komponenten (2) des Systems (1);
b. Transformieren (58) der ermittelten Komponentendiagnosedatensätze (54) in einen oder mehrere Funktionsdiagnosedatensätze, wobei jeder der Funktionsdiagnosedatensätze zumindest die Diagnoseinstanzeinträge aller Diagnoseinstanzen eines Diagnoseinstanztyps umfasst, die einer der Funktionen zugeordnet sind,
c. Erfassen einer funktionsbezogenen Diagnoseanforderung,
d. Bereitstellen (61) von Diagnosedaten basierend auf der Diagnoseanforderung und mindestens einem der Funktionsdiagnosedatensätze, wobei die Diagnosedaten mindestens eine Information über jede der Diagnoseinstanzen des mindestens einen Diagnoseinstanztyps des mindestens einen Funktionsdatensatzes umfassen.

2. Diagnoseverfahren nach Anspruch 1, **dadurch gekennzeichnet, dass** die Diagnoseinstanzeinträge eine eindeutige Diagnoseinstanzkennung umfassen, die eine Kennung der jeweils zugehörigen Komponente (2) oder eine Komponentendiagnosedatensatzkennung und eine Kennung der Diagnoseinstanz sowie vorzugsweise des Diagnoseinstanztyps umfasst.

3. Diagnoseverfahren nach einem der Ansprüche 1 oder 2, **dadurch gekennzeichnet, dass** die Komponentendiagnosedatensätze (54) für die Diagnoseinstanzen jeweils Diagnoseaktionsdaten umfassen, die zum Steuern mindestens einer Diagnoseaktion für die entsprechende Diagnoseinstanz verwendbar sind.

4. Diagnoseverfahren nach einem der vorangehenden Ansprüche, **dadurch gekennzeichnet, dass** für alle die Diagnoseinstanzen eines Diagnoseinstanztyps einer Funktion anhand der entsprechenden Diagnoseaktionsdaten jeweils mindestens eine der Diagnoseaktionen im Zusammenwirken mit den jeweiligen Komponenten (2) parallel und/oder sequenziell ausgeführt werden.

5. Diagnoseverfahren nach einem der vorangehenden Ansprüche, **dadurch gekennzeichnet, dass** die Diagnoseaktion ein Auslesen eines Diagnoseinstanzwertes umfasst.

6. Diagnoseverfahren nach einem der vorangehenden Ansprüche, **dadurch gekennzeichnet, dass** die Diagnoseaktion ein Schreiben/Setzen eines Diagnoseinstanzwertes umfasst.

7. Diagnoseverfahren nach einem der vorangehenden Ansprüche, **dadurch gekennzeichnet, dass** die Diagnoseaktion ein betätigen eines Stellglieds umfasst.

8. Diagnoseverfahren nach einem der vorangehenden Ansprüche, **dadurch gekennzeichnet, dass** die Diagnoseinstanzen Messwerte und/oder Parameter und/oder Parametersätze und/oder Codierungen und/oder Codierungssätze und/oder Stellglieder und/oder Kalibrierungen umfassen.

9. Diagnoseverfahren nach einem der vorangehenden Ansprüche, **dadurch gekennzeichnet, dass** eine Diagnosevorrichtung (56) zur Ausführung verwendet wird, die mit dem System (1) kommunikationstechnisch verbunden wird.

10. Diagnoseverfahren nach einem der vorangehenden Ansprüche, **dadurch gekennzeichnet, dass** die Diagnosedaten in einer funktional gegliederten, baumartigen Ansicht auf einem Anzeigegerät ausgegeben werden.

11. Diagnoseverfahren nach einem der vorangehenden Ansprüche, **dadurch gekennzeichnet, dass** die Komponentendiagnosedatensätze, soweit es möglich ist, aus einer Datenbank (118) einer Diagnosevorrichtung (100) abgerufen werden.

12. Diagnoseverfahren nach einem der vorangehenden Ansprüche, **dadurch gekennzeichnet, dass** zum Ermitteln der Komponentendiagnosedatensätze (54) der Komponenten (2) eine Verbauliste des Systems (1) ausgelesen wird oder von jeder Komponente (2) die zugehörige Komponentendiagnosedatensatzkennung ausgelesen wird.

13. Diagnosevorrichtung (100) zum Ausführen eines Diagnoseverfahren für ein System (1) mit Komponenten (2), die vernetzt sind und Funktionen bereitstellen, wobei für jede Komponente (2) ein Komponentendiagnosedatensatz (54) existiert, der Diagnoseinstanzen für die jeweilige Komponente (2) und Funktionszuordnungseinträge umfasst, wobei die Funktionszuordnungseinträge Zuordnungen der Diagnoseinstanzen zu den Funktionen angeben, umfassend:
a. eine Eingabeeinheit (124) zum Erfassen einer funktionsbezogenen Diagnoseanforderungen;
b. eine Schnittstelle (104), die mit dem System (1) verbindbar ist und so ausgestaltet ist, dass ein Datenaustausch mit den Komponenten (2) des Systems (1) in einem verbundenen Zustand möglich ist;
c. eine Steuereinheit, mit der die Komponentendiagnosedatensätze der Komponenten (2) des Systems ermittelbar sind;
d. eine Transformationseinheit zum Transformieren der ermittelten Komponentendiagnosedatensätze (54) in einen oder mehrere Funktionsdiagnosedatensätze, wobei jeder der Funktionsdiagnosedatensätze zumindest die Diagnoseinstanzeinträge aller Diagnoseinstanzen eines Diagnoseinstanztyps umfasst, die einer der Funktionen zugeordnet sind,
e. eine Bereitstellungseinheit zum Bereitstellen von Diagnosedaten basierend auf der Diagnoseanforderung und mindestens einem der Funktionsdiagnosedatensätze, wobei die Diagnosedaten mindestens eine Information über jede der Diagnoseinstanzen des mindestens einen Diagnoseinstanztyps des mindestens einen Funktionsdatensatzes umfassen.

14. Diagnosevorrichtung (100) nach Anspruch 13, **dadurch gekennzeichnet, dass** die Diagnoseinstanzeinträge eine eindeutige Diagnoseinstanzkennung umfassen, die eine Kennung der jeweils zugehörigen Komponente (2) oder eine Komponentendiagnosedatensatzkennung und eine Kennung der Diagnoseinstanz sowie vorzugsweise des Diagnoseinstanztyps umfasst.

15. Diagnosevorrichtung (100) nach Anspruch 13 oder 14, **gekennzeichnet durch** eine Speichervorrichtung (112), in der die Komponentendiagnosedatensätze (54) in einer Datenbank (118) gespeichert sind.

16. Diagnosevorrichtung (100) nach einem der Ansprüche 13 bis 15, **dadurch gekennzeichnet, dass** der oder die Funktionsdiagnosedatensätze in dem oder einem weiteren Speicher in der oder einer weiteren Datenbank (122) nach der Transformation abgelegt sind.

17. Diagnosevorrichtung (100) nach einem der Ansprüche 13 bis 16, **dadurch gekennzeichnet, dass** die Komponentendiagnosedatensätze (54) für die Diagnoseinstanzen jeweils Diagnoseaktionsdaten umfassen, die zum Steuern mindestens einer Diagnoseaktion für die entsprechende Diagnoseinstanz verwendbar sind.

18. Diagnosevorrichtung (100) nach einem der Ansprüche 13 bis 17, **dadurch gekennzeichnet, dass** für alle die Diagnoseinstanzen eines Diagnoseinstanztyps einer Funktion anhand der entsprechenden Diagnoseaktionsdaten jeweils mindestens eine der Diagnoseaktionen im Zusammenwirken mit den jeweiligen Komponenten (2) parallel und/oder sequenziell automatisch mittels der Steuereinheit ausführbar ist.

19. Diagnosevorrichtung (100) nach einem der Ansprüche 13 bis 18, **dadurch gekennzeichnet, dass** die Diagnoseaktion ein Auslesen eines Diagnoseinstanzwerte umfasst.

20. Diagnosevorrichtung (100) nach einem der Ansprüche 13 bis 19, **dadurch gekennzeichnet, dass** die Diagnoseaktion ein Schreiben/Setzen eines Diagnoseinstanzwerte umfasst.

21. Diagnosevorrichtung (100) nach einem der Ansprüche 13 bis 20, **dadurch gekennzeichnet, dass** die Diagnoseaktion ein betätigen eines Stellglieds umfasst.

22. Diagnosevorrichtung (100) nach einem der Ansprüche 13 bis 21, **dadurch gekennzeichnet, dass** die Diagnoseinstanzen Messwerte und/oder Parameter und/oder Parametersätze und/oder Codierungen und/oder Codierungssätze und/oder Stellglieder und/oder Kalibrierungen umfassen.

23. Diagnosevorrichtung (100) nach einem der Ansprüche 13 bis 22, **gekennzeichnet durch** ein Anzeigegerät zum Ausgeben der Diagnosedaten in einer funktional gegliederten, baumartigen Darstellung.

24. Diagnosevorrichtung (100) nach einem der Ansprüche 13 bis 23, dass die von der Transformationseinheit benötigten Komponentendatensätze, soweit es möglich ist, aus der Datenbank (118) der Diagnosevorrichtung (100) abgerufen werden.

25. Diagnosevorrichtung (100) nach einem der Ansprüche 13 bis 24, **dadurch gekennzeichnet, dass** zum Ermitteln der Komponentendiagnosedatensätze der Komponenten (2) eine Verbauliste des Systems auslesbar ist oder von jeder Komponente (2) eine Komponentendiagnosedatensatzkennung auslesbar ist.

26. Diagnosevorrichtung nach einem der Ansprüche 13 bis 25, **gekennzeichnet durch** eine Schnittstelle zum Ausbilden einer kommunikationstechnischen Verbindung mit dem System (1).

## Claims

1. Diagnosis method for a system (1) having components (2) which are networked and provide functions, wherein there is, for each component (2), a component diagnosis data record (54) which comprises diagnosis instances for the respective component (2) and function association entries, wherein the function association entries indicate associations between the diagnosis instances and the functions, comprising the following steps:
a. the component diagnosis data records (54) for the components (2) of the system (1) are ascertained (57);
b. the ascertained component diagnosis data records (54) are transformed (58) into one or more function diagnosis data records, wherein each of the function diagnosis data records comprises at least the diagnosis instance entries for all diagnosis instances of one diagnosis instance type which are associated with one of the functions,
c. a function-related diagnosis request is captured,
d. diagnosis data are provided (61) on the basis of the diagnosis request and at least one of the function diagnosis data records, wherein the diagnosis data comprise at least one information item about each of the diagnosis instances of the at least one diagnosis instance type of the at least one function data record.

2. Diagnosis method according to Claim 1, **characterized in that** the diagnosis instance entries comprise an explicit diagnosis instance identifier which comprises an identifier for the respective associated component (2) or a component diagnosis data record identifier and an identifier for the diagnosis instance and preferably for the diagnosis instance type.

3. Diagnosis method according to one of Claims 1 and 2, **characterized in that** the component diagnosis data records (54) for the diagnosis instances each comprise diagnosis action data which can be used to control at least one diagnosis action for the relevant diagnosis instance.

4. Diagnosis method according to one of the preceding claims, **characterized in that** for all the diagnosis instances of one diagnosis instance type for a function, at least one of the diagnosis actions is respectively performed in parallel and/or sequentially in cooperation with the respective components (2) using the relevant diagnosis action data.

5. Diagnosis method according to one of the preceding claims, **characterized in that** the diagnosis action comprises reading a diagnosis instance value.

6. Diagnosis method according to one of the preceding claims, **characterized in that** the diagnosis action comprises writing/setting a diagnosis instance value.

7. Diagnosis method according to one of the preceding claims, **characterized in that** the diagnosis action comprises operating an actuating element.

8. Diagnosis method according to one of the preceding claims, **characterized in that** the diagnosis instances comprise measured values and/or parameters and/or parameter sets and/or coding and/or coding sets and/or actuating elements and/or calibrations.

9. Diagnosis method according to one of the preceding claims, **characterized in that** a diagnosis apparatus (56) is used for execution which is connected to the system (1) for communication purposes.

10. Diagnosis method according to one of the preceding claims, **characterized in that** the diagnosis data are output in a functionally structured, tree-like view on a display unit.

11. Diagnosis method according to one of the preceding claims, **characterized in that** the component diagnosis data records are retrieved from a database (118) of a diagnosis apparatus (100) as far as is possible.

12. Diagnosis method according to one of the preceding claims, **characterized in that** the component diagnosis data records (54) of the components (2) are ascertained by reading an installation list for the system (1) or reading from each component (2) the associated component diagnosis data record identifier.

13. Diagnosis apparatus (100) for performing a diagnosis method for a system (1) having components (2) which are networked and provide functions, wherein there is, for each component (2), a component diagnosis data record (54) which comprises diagnosis instances for the respective component (2) and the function association entries, wherein the function association entries indicate associations between the diagnosis instances and the functions, comprising:
a. an input unit (124) for capturing a function-related diagnosis request;
b. an interface (104) which can be connected to the system (1) and is in a form such that data interchange with the components (2) of the system (1) is possible in the connected state;
c. a control unit which can be used to ascertain the component diagnosis data records for the components (2) of the system;
d. a transformation unit for transforming the ascertained component diagnosis data records (54) into one or more function diagnosis data records, wherein each of the function diagnosis data records comprises at least the diagnosis instance entries for all diagnosis instances of one diagnosis instance type which are associated with one of the functions;
e. a provision unit for providing diagnosis data on the basis of the diagnosis request and at least one of the function diagnosis data records, wherein the diagnosis data comprise at least one information item about each of the diagnosis instances of the at least one diagnosis instance type for that at least one function data record.

14. Diagnosis apparatus (100) according to Claim 13, **characterized in that** the diagnosis instance entries comprise an explicit diagnosis instance identifier which comprises an identifier for the respective associated component (2) or a component diagnosis data record identifier and an identifier for the diagnosis instance and preferably for the diagnosis instance type.

15. Diagnosis apparatus (100) according to Claim 13 or 14, **characterized by** a memory apparatus (112) which stores the component diagnosis data records (54) in a database (118).

16. Diagnosis apparatus (100) according to one of Claims 13 to 15, **characterized in that** the function diagnosis data record(s) is/are stored in the or a further memory in the or a further database (122) after the transformation.

17. Diagnosis apparatus (100) according to one of Claims 13 to 16, **characterized in that** the component diagnosis data records (54) for the diagnosis instances each comprise diagnosis action data which can be used to control at least one diagnosis action for the relevant diagnosis instance.

18. Diagnosis apparatus (100) according to one of Claims 13 to 17, **characterized in that** for all the diagnosis instances of one diagnosis instance type for a function, at least one of the diagnosis actions can be respectively performed automatically by the control unit in parallel and/or sequentially in cooperation with the respective components (2) using the relevant diagnosis action data.

19. Diagnosis apparatus (100) according to one of Claims 13 to 18, **characterized in that** the diagnosis action comprises reading a diagnosis instance value.

20. Diagnosis apparatus (100) according to one of Claims 13 to 19, **characterized in that** the diagnosis action comprises writing/setting a diagnosis instance value.

21. Diagnosis apparatus (100) according to one of Claims 13 to 20, **characterized in that** the diagnosis action comprises operating an actuating element.

22. Diagnosis apparatus (100) according to one of Claims 13 to 21, **characterized in that** the diagnosis instances comprise measured values and/or parameters and/or parameter sets and/or codings and/or coding sets and/or actuating elements and/or calibrations.

23. Diagnosis apparatus (100) according to one of Claims 13 to 22, **characterized by** a display unit for outputting the diagnosis data in a functionally structured, tree-like representation.

24. Diagnosis apparatus (100) according to one of Claims 13 to 23, **characterized in that** the component data records required by the transformation unit are retrieved from the database (118) of the diagnosis apparatus (100) as far as is possible.

25. Diagnosis apparatus (100) according to one of Claims 13 to 24, **characterized in that** the component diagnosis data records for the components (2) can be ascertained by reading an installation list for the system or by reading from each component (2) a component diagnosis data record identifier.

26. Diagnosis apparatus according to one of Claims 13 to 25, **characterized by** an interface for producing a communications link to the system (1).

## Revendications

1. Procédé de diagnostic pour un système (1) avec des composants (2) qui sont reliés en réseau et qui fournissent des fonctions, selon lequel il existe pour chaque composant (2) un jeu de données de diagnostic de composant (54) qui comprend des instances de diagnostic pour le composant correspondant (2) ainsi que des entrées d'affectation de fonction, les entrées d'affectation de fonction indiquant les affectations des instances de diagnostic aux fonctions, comprenant les étapes suivantes :
a. Détermination (57) des jeux de données de diagnostic de composant (54) des composants (2) du système (1) ;
b. Transformation (58) des jeux de données de diagnostic de composant (54) déterminés en un ou plusieurs jeux de données de diagnostic de fonction, chaque jeux de données de diagnostic de fonction comprenant au moins les entrées d'instance de diagnostic de toutes les instances de diagnostic d'un type d'instance de diagnostic qui sont associées à l'une des fonctions,
c. Acquisition d'une demande de diagnostic relatif à une fonction,
d. Mise à disposition (61) de données de diagnostic en se basant sur la demande de diagnostic et au moins l'un des jeux de données de diagnostic de fonction, les données de diagnostic incluant au moins une information sur chacune des instances de diagnostic de l'au moins un type d'instance de diagnostic de l'au moins un jeu de données de fonction.

2. Procédé de diagnostic selon la revendication 1, **caractérisé en ce que** les entrées d'instance de diagnostic comprennent un identifiant d'instance de diagnostic univoque, lequel inclut un identifiant du composant (2) associé respectif ou un identifiant de jeu de données de diagnostic de composant ainsi qu'un identifiant de l'instance de diagnostic et de préférence du type d'instance de diagnostic.

3. Procédé de diagnostic selon l'une des revendications 1 ou 2, **caractérisé en ce que** les jeux de données de diagnostic de composant (54) pour les instances de diagnostic comprennent respectivement des dates d'action de diagnostic qui peuvent être utilisées pour commander au moins une action de diagnostic pour l'instance de diagnostic correspondante.

4. Procédé de diagnostic selon l'une des revendications précédentes, **caractérisé en ce que** pour toutes les instances de diagnostic d'un type d'instance de diagnostic d'une fonction, au moins l'une des actions de diagnostic est à chaque fois exécutée parallèlement et/ou séquentiellement en interaction avec les composants (2) respectifs au moyen de données d'action de diagnostic correspondantes.

5. Procédé de diagnostic selon l'une des revendications précédentes, **caractérisé en ce que** l'action de diagnostic comprend une lecture d'une valeur d'instance de diagnostic.

6. Procédé de diagnostic selon l'une des revendications précédentes, **caractérisé en ce que** l'action de diagnostic comprend une écriture/définition d'une valeur d'instance de diagnostic.

7. Procédé de diagnostic selon l'une des revendications précédentes, **caractérisé en ce que** l'action de diagnostic comprend un actionnement d'un élément de commande.

8. Procédé de diagnostic selon l'une des revendications précédentes, **caractérisé en ce que** les instances de diagnostic comprennent des valeurs mesurées et/ou des paramètres et/ou des jeux de paramètres et/ou des codages et/ou des jeux de codages et/ou des éléments de commande et/ou des calibrages.

9. Procédé de diagnostic selon l'une des revendications précédentes, **caractérisé en ce qu'**un dispositif de diagnostic (56) est utilisé pour l'exécution, lequel est relié par technique de communication avec le système (1).

10. Procédé de diagnostic selon l'une des revendications précédentes, **caractérisé en ce que** les données de diagnostic sont délivrées sur un appareil d'affichage dans une vue en arborescence à organisation fonctionnelle.

11. Procédé de diagnostic selon l'une des revendications précédentes, **caractérisé en ce que** les jeux de données de diagnostic de composant, dans la mesure du possible, sont chargés depuis une base de données (118) d'un dispositif de diagnostic (100).

12. Procédé de diagnostic selon l'une des revendications précédentes, **caractérisé en ce que** la détermination des jeux de données de diagnostic de composant (54) des composants (2) s'effectue en lisant une liste de construction du système (1) ou par la lecture par chaque composant (2) de l'identifiant de jeu de données de diagnostic de composant associé.

13. Dispositif de diagnostic (100) pour exécuter un procédé de diagnostic pour un système (1) avec des composants (2) qui sont reliés en réseau et qui fournissent des fonctions, avec lequel il existe pour chaque composant (2) un jeu de données de diagnostic de composant (54) qui comprend des instances de diagnostic pour le composant correspondant (2) ainsi que des entrées d'affectation de fonction, les entrées d'affectation de fonction indiquant les affectations des instances de diagnostic aux fonctions, comprenant :
a. une unité de saisie (124) pour l'acquisition d'une demande de diagnostic relatif à une fonction ;
b. une interface (104) qui peut être reliée avec le système (1) et qui est configurée de telle sorte qu'un échange de données est possible avec les composants (2) du système (1) dans un état connecté ;
c. une unité de commande qui permet de déterminer les jeux de données de diagnostic de composant des composants (2) du système ;
d. une unité de transformation pour transformer les jeux de données de diagnostic de composant (54) déterminés en un ou plusieurs jeux de données de diagnostic de fonction, chacun des jeux de données de diagnostic de fonction comprenant au moins les entrées d'instance de diagnostic de toutes les instances de diagnostic d'un type d'instance de diagnostic qui sont associées à l'une des fonctions ;
e. une unité de mise à disposition pour mettre à disposition des données de diagnostic en se basant sur la demande de diagnostic et au moins l'un des jeux de données de diagnostic de fonction, les données de diagnostic incluant au moins une information sur chacune des instances de diagnostic de l'au moins un type d'instance de diagnostic de l'au moins un jeu de données de fonction.

14. Dispositif de diagnostic (100) selon la revendication 13, **caractérisé en ce que** les entrées d'instance de diagnostic comprennent un identifiant d'instance de diagnostic univoque, lequel inclut un identifiant du composant (2) associé respectif ou un identifiant de jeu de données de diagnostic de composant ainsi qu'un identifiant de l'instance de diagnostic et de préférence du type d'instance de diagnostic.

15. Dispositif de diagnostic (100) selon la revendication 13 ou 14, **caractérisé par** un dispositif de mémorisation (112) dans lequel les jeux de données de diagnostic de composant (54) sont mémorisés dans une base de données (118).

16. Dispositif de diagnostic (100) selon l'une des revendications 13 à 15, **caractérisé en ce que** le ou les jeux de données de diagnostic de fonction sont stockés après la transformation dans la ou une autre mémoire dans la ou une autre base de données (122).

17. Dispositif de diagnostic (100) selon l'une des revendications 13 à 16, **caractérisé en ce que** les jeux de données de diagnostic de composant (54) pour les instances de diagnostic comprennent respectivement des dates d'action de diagnostic qui peuvent être utilisées pour commander au moins une action de diagnostic pour l'instance de diagnostic correspondante.

18. Dispositif de diagnostic (100) selon l'une des revendications 13 à 17, **caractérisé en ce que** pour toutes les instances de diagnostic d'un type d'instance de diagnostic d'une fonction, au moins l'une des actions de diagnostic peut à chaque fois être exécutée automatiquement au moyen de l'unité de commande, parallèlement et/ou séquentiellement en interaction avec les composants (2) respectifs au moyen de données d'action de diagnostic correspondantes.

19. Dispositif de diagnostic (100) selon l'une des revendications 13 à 18, **caractérisé en ce que** l'action de diagnostic comprend une lecture d'une valeur d'instance de diagnostic.

20. Dispositif de diagnostic (100) selon l'une des revendications 13 à 19, **caractérisé en ce que** l'action de diagnostic comprend une écriture/définition d'une valeur d'instance de diagnostic.

21. Dispositif de diagnostic (100) selon l'une des revendications 13 à 20, **caractérisé en ce que** l'action de diagnostic comprend un actionnement d'un élément de commande.

22. Dispositif de diagnostic (100) selon l'une des revendications 13 à 21, **caractérisé en ce que** les instances de diagnostic comprennent des valeurs mesurées et/ou des paramètres et/ou des jeux de paramètres et/ou des codages et/ou des jeux de codages et/ou des éléments de commande et/ou des calibrages.

23. Dispositif de diagnostic (100) selon l'une des revendications 13 à 22, **caractérisé par** un appareil d'affichage pour délivrer les données de diagnostic dans une vue en arborescence à organisation fonctionnelle.

24. Dispositif de diagnostic (100) selon l'une des revendications 13 à 23, **caractérisé en ce que** les jeux de données de diagnostic de composant requis par l'unité de transformation, dans la mesure du possible, sont chargés depuis la base de données (118) du dispositif de diagnostic (100).

25. Dispositif de diagnostic (100) selon l'une des revendications 13 à 24, **caractérisé en ce qu'**une liste de construction du système peut être lue pour déterminer les jeux de données de diagnostic de composant des composants (2) ou alors un identifiant de jeu de données de diagnostic de composant peut être lu par chaque composant (2).

26. Dispositif de diagnostic selon l'une des revendications 13 à 25, **caractérisé par** une interface pour former une liaison technique de communication avec le système (1).
